## Europäisches Patentamt
## European Patent Office
## Office européen des brevets

(19)

(11) Veröffentlichungsnummer: **0 069 936**
**B1**

(12) **EUROPÄISCHE PATENTSCHRIFT**

(45) Veröffentlichungstag der Patentschrift:
18.03.87

(21) Anmeldenummer: 82105917.7

(22) Anmeldetag: 02.07.82

(51) Int. Cl.⁴: **C 09 D 3/00**, C 09 D 5/10,
C 08 L 51/02, C 08 L 51/00,
C 08 F 251/02, C 08 F 265/06,
C 08 F 283/02

(54) **Verfahren zur Herstellung von stabilen wässrigen Dispersionen und deren Verwendung als Bindemittel zur Herstellung von Lacken, insbesondere Zweischicht-Metalleffekt-Lacksystemen.**

(30) Priorität: 04.07.81 DE 3126549

(43) Veröffentlichungstag der Anmeldung:
19.01.83 Patentblatt 83/3

(45) Bekanntmachung des Hinweises auf die Patenterteilung:
18.03.87 Patentblatt 87/12

(84) Benannte Vertragsstaaten:
AT BE CH DE FR GB IT LI LU NL SE

(56) Entgegenhaltungen:
GB-A-2 048 282
US-A-4 136 068

CHEMICAL ABSTRACTS, Band 84, Nr. 18, 3. Mai
1976, Seite 91, Nr. 123508p, Columbus, Ohio, US

(73) Patentinhaber: Bollig & Kemper, Vitalisstrasse 114,
D-5000 Köln 30 (DE)

(72) Erfinder: Lennartz, Kurt, Bachstrasse 2, D-5042
Erftstadt- Ahrem (DE)
Erfinder: Massoné, Matthias, Albert- Kindlestrasse
28, D-5000 Köln 40 (DE)

(74) Vertreter: von Kreisler, Alek, Dipl.- Chem.,
Deichmannhaus am Hauptbahnhof, D-5000 Köln 1
(DE)

EP 0 069 936 B1

## Beschreibung

Die Erfindung betrifft ein Verfahren zur Herstellung stabiler Dispersionen von Celluloseestern in Wasser und deren Verwendung als Bindemittel zur Herstellung von Lacken.

Diese Bindemittel eignen sich hervorragend zur Formulierung von wässrigen Metalleffekt- und Uni-Basislacken für das Zweischicht-Naß-in-Naß-Lackierverfahren.

Dieses Verfahren wird vor allem in der Automobilindustrie zur rationellen Herstellung von hochwertigen Automobildecklackierungen im großen Maßstab angewendet.

Hierbei wird zuerst ein pigmentierter Basislack mittels geeigneter Spritzverfahren auf das Substrat aufgetragen und nach wenigen Minuten ohne zwischenzeitliches Einbrennen mit einem geeigneten Klarlack überspritzt. Beide Schichten werden anschließend gemeinsam durch Einbrennen bei Temperaturen von etwa 80 bis 180°C ausgehärtet.

Ein besonderer Vorteil ist darin zu sehen, daß aufgrund der schützenden Wirkung von Klarlackschicht auch die zur Erzielung besonders brillanter Metalleffekte erforderlichen groben Metallbronzetypen eingesetzt werden können, ohne daß sich die sonst bei derartigen Einschichtlackierungen auftretenden Nachteile wie geringer Glanz, rauhe Oberfläche und vor allem schlechte Witterungsbeständigkeit zeigen. Zweischicht-Systeme auf der Basis konventioneller, lösungsmittelhaltiger Lacke sind seit längerem aus der Praxis hinreichend bekannt und weltweit im industriellen Einsatz. Der Feststoffgehalt der bekannten konventionellen Metallic-Basislacke ist bei Verarbeitungsviskosität sehr niedrig und liegt meist unter 20 Gewichtsprozent.

Die damit verbundene hohe Lösungsmittelemission bedeutet eine erhebliche Belastung der Umwelt,und ihre Beseitigung in geeigneten Nachverbrennungs- oder Rückgewinnungsanlagen verursacht beachtliche Mehrkosten.

Durch die Umstellung vor allem der feststoffarmen Metallicbasislacke auf wasserlösliche Bindemittel sind demnach bedeutende Einsparungen an organischen Lösungsmitteln und eine deutliche Verminderung der Umweltbelastung zu erreichen

Die US-PS 4 136 068 beschreibt die Bildung eines Celluloseester-Propfcopolymeren, das seine für die Zwecke der Erfindung bevorzugten Eigenschaften, nämlich seine Dispergierbarkeit in wässrigen Überzugszusammensetzungen, dadurch erhält, daß auf ein Celluloseesterderivat ethylenisch ungesättigte, Carboxylgruppen enthaltende Monomere aufpolymerisiert werden. Die hergestellten Polymerisationsprodukte enthalten zwar in einem organischen Lösungsmittel gelöste Celluloseesterderivate und bei erhöhter Temperatur polymerisierte, aus ethylenisch ungesättigten Monomeren in Gegenwart der gelösten Celluloseester copolymerisierte Copolymere, ergeben jedoch opake, glanzlose Filme bei Aufspritzen auf metallische Untergründe, was - unter anderem - der Abwesenheit der Harze in der Polymerisationsmischung zuzuschreiben ist.

In der DE-OS 2 926 584 sind wasserverdünnbare Metallic-Basislacke beschrieben, die als Bindemittel ein mit Amin neutralisiertes Reaktionsprodukt aus einem Polyester, Trimellithsäure und epoxidierten pflanzlichen Ölen enthalten. Derartige Systeme auf der Basis trocknender Fettsäuren besitzen jedoch erfahrungsgemäß nur begrenzte Lichtechtheit, die Folge davon sind nach einiger Zeit auftretende Vergilbungserscheinungen und damit die Verfälschung des ursprünglichen Farbtons, so daß diese Lacke die speziell von der Automobilindustrie gestellten hohen Beständigkeitsanforderungen nur unzureichend erfüllen. Ein weiterer Nachteil dieses Systems ist sein hoher Bedarf an organischen Lösungsmitteln.

Die meisten der bekannten konventionellen Basislacke enthalten als wesentlichen Bindemittelbestandteil Ester der Cellulose, vorzugsweise Celluloseacetobutyrat oder Celluloseacetopropionat, deren Mitverwendung schnelle Antrocknung, gute Ausrichtung der Metallpigmente und ausreichende Beständigkeit gegen Anlösen durch den nachfolgend aufgetragenen Klarlack bewirkt.

Für wässrige Systeme konnten diese Vorzüge der Celluloseester bisher nicht genutzt werden, da die Einarbeitung in die wässrige Phase nicht zu stabilen Dispersionen führte. Die Möglichkeit, die Celluloseester in Form ihrer Lösungen in organischen Lösungsmitteln unter Zuhilfenahme geeigneter ionogener oder nichtionogener Emulgatoren in stabile wässrige Dispersionen zu überführen, kommt wegen der damit verbundenen erheblichen Beeinträchtigung des metallischen Effekts und vor allem der Wetterbeständigkeit für hochwertige, außenbeständige Lackierungen nicht in Betracht.

Aufgabe der vorliegenden Erfindung war daher, wasserlösliche Bindemittel mit hohem Celluloseestergehalt bereitzustellen, welche die vorgenannten Nachteile nicht aufweisen und zur Formulierung brillanter und beständiger Basislacke für das Zweischicht-Naß-in-Naß-Verfahren geeignet sind.

Überraschenderweise erhält man stabile Dispersionen von Celluloseestern in Wasser, wenn man deren Lösungen an der Copolymerisation von Harzen und/oder Dispersionen aus $\alpha,\beta$-ethylenisch ungesättigten Monomeren unmittelbar teilnehmen läßt.

Die Erfindung betrifft ein Verfahren zur Herstellung stabiler Dispersionen von Celluloseestern in Wasser, dadurch gekennzeichnet, daß ein Gemisch aus einem wasserlöslichen Harz aus der Gruppe Polyesterharze, Acrylharze und Alkydharze und $\alpha,\beta$-ethylenisch ungesättigten Monomeren aus der Gruppe

(A) Ester einer $\alpha,\beta$-ethylenisch ungesättigen Carbonsäure mit einem 1 bis 8 C-Atome enthaltenden Alkohol,

(B) Hydroxylgruppen in der Estergruppierung enthaltenden Estern der Acrylsäure und Methacrylsäure,

(C) Vinylmonomere, die neben einer polymerisierbaren Doppelbindung noch weitere, zur Vernetzung fähige, funktionelle Gruppen enthalten und

(D) weitere, zu den genannten Gruppen (A) bis (C) nicht gehörende Gruppen copolymerisierbarer Monomerer,

wobei die Gesamtmenge der Komponenten (A) bis (D) 100 Gew.-% ergibt, in Gegenwart der gelösten Celluloseester aus der Gruppe der Celluloseacetopropionate und Celluloseacetobutyrate copolymerisiert wird, wobei der Celluloseestergehalt, bezogen auf den Gesamtfeststoffgehalt der Dispersion, zwischen 5 und 40 % beträgt.

Die Bindemittel der vorliegenden Erfindung weisen diese Nachteile nicht auf, sie sind frei von gilbungsfördernden Gruppierungen und enthalten nur geringe Mengen organischer Lösungsmittel. Zum Einstellen auf Spritzviskosität ist nur Wasser erforderlich.

Die Herstellung solcher Dispersionen läßt sich auf verschiedene Arten durchführen.

1) Ein saures Acryl- oder Polyesterharz (Säurezahl etwa 30 bis 120 mg KOH/g) wird mit einem geeigneten flüchtigen Amin neutralisiert und in Wasser gelöst.

Diese Lösung wird im Reaktionsgefäß vorgelegt und dient für die nachfolgend sich bildende Dispersion als Stabilisator und Emulgator.

In diese Lösung wird bei Reaktionstemperatur unter ständigem Rühren ein Gemisch aus verschiedenen, im einzelnen zu bestimmenden Monomeren und dem in diesen Monomeren gelösten Celluloseester eingetragen und in Gegenwart geeigneter Katalysatoren copolymerisiert.

Die so erhaltenen Dispersionen sind stabil und weisen ein gutes Fließvermögen auf.

2) Der Celluloseester wird in geeigneten organischen Lösungsmitteln gelöst und vorgelegt. In diese Lösung wird unter Rühren bei erhöhter Temperatur und in Gegenwart geeigneter Katalysatoren ein Gemisch von $\alpha,\beta$-ethylenisch ungesättigten Monomeren mit einem ausreichend hohen Gehalt an $\alpha,\beta$-ethylenisch ungesättigten Monocarbonsäuren eingeleitet und zur Polymerisation gebracht.

Es entsteht zunächst je nach Art der verwendeten Monomeren und in Abhängigkeit von der Reaktionstemperatur eine klare bis trübe Harzlösung. Dieser Lösung wird die zur Neutralisation erforderliche Menge eines geeigneten Amins zugesetzt und mit Wasser auf die gewünschte Konzentration verdünnt. Es entsteht eine Dispersion mit guter Stabilität.

3) Das zweite vorstehend beschriebene Verfahren wird dahingehend abgewandet, daß nur ein Teil des Celluloseesters als Lösung vorgelegt wird. Der andere Teil wird im Monomerengemisch gelöst. Man erzielt auf diese Weise eine Reduzierung des zum Lösen des Celluloseesters erforderlichen Lösungsmittelanteils, weil dessen Aufgabe teilweise vom Monomerengemisch übernommen wird.

Der Celluloseestergehalt der erfindungsgemäßen Dispersionen beträgt zwischen 5 und 40 Gewichtsprozent. Der Gehalt an organischen Lösungsmitteln in den Dispersionen kann bei Bedarf durch Abdestillieren unter leichtem Vakuum und bei gleichzeitiger Zugabe von Wasser vermindert werden, sofern die verwendeten Lösungsmittel ausreichende Flüchtigkeit besitzen.

Aus den erfindungsgemäßen Dispersionen lassen sich durch Kombination mit geeigneten Aminoformaldehydharzen oder blockierten Polyisocyanaten und durch Einfärben mit Pigmenten und Metallbronzen hochwertige Basislacke herstellen, die nach kurzer Ablüftzeit mit Klarlacken auf konventioneller oder wässriger Basis oder auch mit farblosen Pulverlacken überspritzbar sind und außergewöhnlich brillante Überzüge mit hervorragendem Glanz und guter Wetterbeständigkeit liefern. Geeignete Bindemittel für derartige Klarlacke sind z.B. mit gesättigten Fettsäuren modifizierte Alkydharze, ölfreie gesättigte Polyester oder Acrylharze, jeweils in Kombination mit geeigneten Aminoformaldehydharzen.

Die Herstellung witterungsbeständiger wasserverdünnbarer Metalleffektlacke bzw. Metalleffektbasislacke mit brillantem, metallischen Aussehen der daraus erstellten Lackierungen ist im allgemeinen problematisch.

Für diesen Zweck werden überwiegend nichtaufschwimmende (non-leafing) Aluminiumbronzen eingesetzt, bei denen es zur Ausbildung eines guten metallischen Effekts vor allem auf die korrekte Ausrichtung der Bronzeteilchen beim Auftreffen auf das Substrat ankommt. Die Applikation erfolgt meist im Spritzverfahren.

Die besten Metalleffekte erreicht man durch Verwendung relativ hochviskoser Bindemittel mit geringer Polarität. So wurden z.B. wasserlösliche Cellulosederivate wie Methylcellulose und Carboxymethylcellulose in Kombination mit wasserlöslichen Alkydharzen, ölfreien Polyestern und Acrylharzen untersucht. Die Wasserbeständigkeit dieser Kombinationen war in keinem Fall ausreichend, in vielen Fällen trat eine Unverträglichkeit auf. Celluloseester wie Celluloseacetobutyrate und -propionate weisen zwar gute Beständigkeiten auf, lassen sich aber nicht ohne weiteres in wässrige Lacke einarbeiten.

Durch das erfindungsgemäße Verfahren wurde eine Möglichkeit geschaffen, diese Celluloseester in die wässrige Phase stabil einzuarbeiten, indem man diese in gelöster Form an der Copolymerisation geeigneter $\alpha,\beta$-ethylenisch ungesättigter Monomerer teilnehmen läßt. Die so erhaltenen Dispersionen neigen weder zum Absetzen noch zur Klumpenbildung und sind gut fließfähig.

Für die erfindungsgemäßen Dispersionen geeignete Celluloseester sind vorzugsweise Celluloseacetobutyrate (CAB) und Celluloseacetopropionat (CAP), wobei die CAB-Sorten Acetylgehalte von 2 bis 30 %, Butyrylgehalte von 15 bis 55 % und Viskositäten von 0,038 bis 152 dPas aufweisen können. Geeignete CAP-Sorten besitzen Acetylgehalte von 2 bis 5 % und Propionylgehalte von 30 bis 55 % bei Viskositäten von 0,76 bis 76 dPas, bestimmt nach ASTM-D 817-65 A und D-1343-56.

Nachfolgend werden Beispiele von Celluloseestern aufgezählt welche für die Herstellung der erfindungsgemäßen Dispersionen geeignet sind:

| Produkt-bezeichnung | Hersteller | Acetyl % | Butyryl % | Viskosität dPas |
|---|---|---|---|---|
| CAB-551-0,01 | Eastman® | 2,0 | 53 | 0,038 |
| CAB-500-1 | " | 5,0 | 49 | 3,8 |
| CAB-381-0,5 | " | 13,0 | 37 | 1,9 |
| CAB-381-20 | " | 13,0 | 37 | 76,0 |
| CAB-272-3 | " | 20,5 | 26 | 11,4 |
| CAB-171-40 | " | 29,5 | 17 | 152,0 |

|  |  |  | Propionyl % |  |
|---|---|---|---|---|
| CAP-504-0,2 | " | 2,5 | 40 | 0,76 |
| CAP-482-20 | " | 2,5 | 46 | 76,0 |

Selbstverständlich lassen sich auch die entsprechenden-Produkte anderer Hersteller, wie z.B. die Cellit⌐-Typen der Fa. Bayer verwenden.

Zur Herstellung der erfindungsgemäßen Dispersionen mussen die Celluloseester in gelöster Form verarbeitet werden. Die Auswahl der Lösungsmittel richtet sich nach der Löslichkeit und Viskosität der verwendeten Celluloseester. Es kommen vorzugsweise solche Lösungsmittel zur Anwendung, die mit Wasser in jedem Verhältnis mischbar sind, doch können zur Erzielung bestimmter Effekte auch mit Wasser nicht oder nur begrenzt mischbare Lösungsmittel mit verwendet werden.

In manchen Fällen ist es vorteilhaft, wenn die Celluloseester in dem zur Polymerisation gelangenden Monomerengemisch gelöst werden, besonders dann, wenn es sich um leicht lösliche, niedrigviskose Celluloseestersorten handelt. Zur Verringerung der Viskosität und zur Verbesserung der Lösekraft können dem Monomerengemisch Lösungsmittel der vorbeschriebenen Art zugesetzt werden.

Geeignete, voll wassermischbare Lösungsmittel sind niedere aliphatische Alkohole wie z.B. Methanol, Ethanol, n-Propanol, iso-Propanol, Monoether des Ethylenglykols oder des Diglykols wie z.B. Methylglykol, Ethylglykol, Propylglykol, Butylglykol, Ethyldiglykol, Butyldiglykol, niedere aliphatische Ketone wie z.B. Aceton, Methylethylketon, Diacetonalkohol, Ester wie z.B. Methylglykolacetat und cyclische Ether wie Tetrahydrofuran und Dioxan.

Begrenzt wassermischbare Lösungsmittel sind z.B. n-Butanol und dessen Stellungsisomere, Methyl-, Ethyl- und Propylacetat sowie Ethylglykolacetat.

. Nicht wassermischbare Lösungsmittel sind z.B. Toluol, Xylol, Solventnaphta, aliphatische und cycloaliphatische Alkohole mit 5 bis 10 Kohlenstoffatomen sowie deren Essigsäureester, Butylacetat, weiterhin Ketone wie Methylisobutylketon, Methylisoamylketon, Isophoron, Methoxyhexanon, TCD-Keton A®, Cyclohexanon, Methylcyclohexanon.

In geringen Mengen können auch Benzin- und. Terpenkohlenwasserstoffe mit verwendet werden, jedoch sollte mit Rücksicht auf die begrenzte Verträglichkeit der Celluloseester mit diesen Lösungsmitteln deren Anteil am gesamten organischen Lösungsmittel nicht mehr als 10 % betragen.

Die zur Herstellung der Copolymerisate in Betracht kommenden Monomeren werden in vier Gruppen unterteilt.

Zur Gruppe (A) gehören die Ester $\alpha,\beta$-ethylenisch ungesättigter Carbonsäuren mit 1- 8 Kohlenstoffatomen enthaltenden Alkoholen. Geeignete ungesättigte Carbonsäuren sind vorzugsweise Acryl- und Methacrylsäure, aber auch ungesättigte Dicarbonsäuren wie z.B. Maleinsäure, Fumarsäure, Itaconsäure und Crotonsäure können in Form ihrer Alkylester zum Einsatz kommen. Bevorzugte Monomere sind Ethyl-, Butyl- und 2-Ethylhexylacrylat, Methyl-, Ethyl-, Butyl-, Isobutyl- und 2-Ethylhexylmethacrylat. Die Komponente (A) ist im Copolymeren mit 2 bis 80, vorzugsweise mit 10 bis 55 Gew.-% enthalten.

Zur Gruppe (B) gehören hydroxylgruppenhaltige Acryl- und Methacrylsäureester wie z.B. 2-Hydroxiethylacrylat, 2-Hydroxipropylacrylat und Butandiolmonoacrylat sowie 2 Hydroxiethylmethacrylat, 2-hydroxipropylmethacrylat, Polypropylenglykolmonomethacrylat. Alle diese Verbindungen ermöglichen den Einbau von reaktionsfähigen Hydroxylgruppen in das Copolymerisat und somit die spätere Vernetzung beim Einbrennen der Filme. Die Komponente (B) ist im Copolymeren mit 5 bis 95 vorzugsweise mit 12 bis 66 Gew.-% enthalten. Vinylmonomere der Gruppe (C) enthalten neben einer polymerisierbaren Doppelbindung noch weitere reaktionsfähige Gruppen, die zur Vernetzung der aus der Dispersion hergestellten Filme beitragen können, so z.B. Carboxylgruppen wie Acrylsäure, Methacrylsäure, Maleinsäure, Fumarsäure, Itaconsäure, Epoxidgruppen wie Glycidylacrylat, Glycidylmethacrylat, freie oder veretherte N-Methylolgruppen wie z.B. N-Methylolacrylamid, N-Methylolmethacrylamid und N-Isobutoxymethacrylamid, Amino- oder Amidogruppen wie Acryl- und Methacrylamid. Die Komponente (C) ist im Copolymer mit 2 bis 70, vorzugsweise mit 3 bis 30 Gew.-% enthalten.

Die Gruppe (D) umfaßt alle unter (A) bis (C) nicht aufgeführten copolymerisierbaren Monomeren, beispielsweise Vinylaromaten wie Styrol, α-Methylstyrol, Vinyltoluol, andere Derivate ungesättigten Carbonsäuren wie z.B. Acrylnitril, Methacrylnitril, Vinylester kurzkettiger Carbonsäuren wie z.B. Vinylacetat, Vinylpropionat, Vinylbutyrat. Bevorzugte Vertreter der Gruppe (D) sind Styrol und Acrylnitril, die jeweils allein oder im Gemisch miteinander verwendet werden können. Der Anteil der Komponente (D) im Copolymeren beträgt 3 bis 80, vorzugsweise 20 bis 66 Gew.-%.

Die Monomeren können alleine oder als Gemische verwendet werden, wie z.B. Monomere der Gruppe (A) mit solchen der Gruppe (B) und/oder (C) und/oder (D) und/oder Monomerengemische aus den einzelnen Gruppen.

Ein besonderes Merkmal der erfindungsgemäßen Dispersionen bzw. Bindemittel ist, daß sie Celluloseester in lagerstabiler Form enthalten und die Herstellung von wasserverdünnbaren Metalleffektbasislacken mit hervorragendem metallischen Aussehen und ausgezeichneter Witterungsbeständigkeit und Lichtechtheit ermöglichen.

Es wurde ferner gefunden daß es vorteilhaft ist, in Metallic Basislacken Wachse wie Ethylenmischpolymerisate zu verwenden. Dabei hat sich überraschenderweise herausggestellt, daß es wesentlich ist, daß man die Ethylenmischpolymerisate zum Ausgangsgemisch der Monomeren hinzugibt und dann erst die Polymerisation durchführt. Dies hat den Vorteil, daß in der sich nach der Polymerisation ergebenden Dispersion das Polyethylenmischpolymerisat nicht ausfällt. Gibt man das Ethylenmischpolymerisat nach der Polymerisation hinzu, fällt es schon nach geringer Temperaturbelastung aus und verursacht bei der Weiterverarbeitunq zu Lacken Oberflächenstörungen, wie z.B. Stippen und scheckiges Aussehen.

Zur Herstellung der erfindungsgemässen Dispersionen geeignete Polymere können sowohl Homopolymere wie auch Copolymere des Ethylens mit 8 - 29 % Vinylacetat, als auch Copolymere mit Acrylsäure, die eine Säurezahl zwischen 30 und 120 aufweisen, Verwendung finden.

Die Erfindung wird nachstehend anhand von Beispielen weiter erläutert.

**Beispiel 1**

In einem 2-1-Vierhals-Rundkolben, der mit Thermometer, Ruhrer, Gaseinleitungsrohr und Rückflußkühler versehen ist wird eine Lösung von 50 g Celluloseacetobutyrat (Eastman® CAB 553-0,4) in 117 g Butylglykol und 2,7 g Cumolhydroperoxid auf 130°C erhitzt. Zu der vorgelegten Mischung wird mit Hilfe eines geeigneten Tropftrichters unter Durchleitung eines schwachen Stickstoffstromes innerhalb von 4 Stunden eine Mischung aus 40,4 g Styrol, 84,8 g Methylmethacrylat, 18,2 g Butylmethacrylat, 24,2 g 2-Hydroxiethylmethacrylat, 32,3 g Methacrylsäure, 2,7 g tert.-Butylperoctoat und 32,1 g Butylglykol zugetropft und noch eine weitere Stunde bei 130°C gehalten. Anschließend wird eine Mischung von 51,1 g Butylglykol und 1,1 g tert. Butylperoctoat innerhalb von 20 Minuten eingetragen. Der Ansatz wird noch 2 Stunden bei 130°C gehalten und anschließend auf 80°C abgekühlt. Nach der Zugabe von 33,3 g Dimethylethanolamin wird mit 509,0 g vollentsalztem Wasser verdünnt.

Die so erhaltene Dispersion hat einen Festkörpergehalt von 25,5 Gew.-%. Die Viskosität der mit Wasser auf 20 Gew.-% verdünnten Dispersion beträgt 44 Sekunden, gemessen im DIN-Auslaufbecher mit 4mm-Düse bei 20°C.

**Beispiel 2**

In der im Beispiel 1 beschriebenen Apparatur werden vorgelegt:
150 g wasserlösliches Polyesterharz (mit 30 % Isononansäure, Hydroxylzahl 130, Säurezahl 50), 75%ige Lösung in Isopropanol/Butylglykol 1 : 1
20 g Dimethylethanolamin
450 g vollentsalztes Wasser
8 g tert. Butylperoctoat.
Innerhalb 4 Stunden wird bei 80°C unter Durchleiten von Stickstoff folgende Mischung zugetropft:
100 g Styrol
100 g Ethylacrylat
50 g Butylmethacrylat
85 g Hydroxypropylacrylat
60 g Acrylnitril
10 g tert. Butylperoctoat
40 g Celluloseacetobutyrat (Eastman® CAB 551-0,01)
Die Copolymerisation wird noch weitere 2 Stunden bei 80° fortgesetzt und anschließend mit 100 g Wasser verdünnt. Die so hergestellte Dispersion hat einen Festkörpergehalt von 46,6 %.

## Beispiel 3

Zur Anwendung kommt die gleiche Apparatur wie in Beispiel 1 beschrieben.
Es werden vorgelegt:
200 g hitzehärtbares, wasserlösliches Acrylharz, 78 % in Methylglykol (Säurezahl ca. 90)
20 g Triethylamin
409 g vollentsalztes Wasser
8 g tert. Butylperoctoat
Zu dieser Mischung tropft man innerhalb von 3 Stunden bei 80°C unter Durchleiten von Stickstoff folgende Lösung:
35 g Celluloseacetobutyrat (Eastman® CAB 551-0,2)
111 g Styrol
120 g Butylacrylat
75 g 2-Hydroxypropylacrylat
30 g Acrylnitril
5 g Azobisisobuttersäurenitril
2 g tert. Butylperoctoat
Nach beendeter Zugabe hält man den Ansatz noch 2 Stunden bei 80°C und kühlt dann unter ständigem Rühren ab. Man erhält eine Dispersion mit 53 % Feststoffgehalt.

## Beispiel 4

Mit der Dispersion aus Beispiel 1 wird ein wasserlöslicher Metalleffekt-Basislack angefertigt nach folgender Rezeptur:
70 g Aluminiumbronze, non leafing, ca. 65 % in Aromaten werden angeteigt mit
200 g Dispersion gemäß Beispiel 1,
10 g Siliconöl (1 % in Wasser)
100 g Wasser
In einem anderen Gefäß mischt man
700 g Dispersion gemäß Beispiel 1,
183 g methyliertes wasserlösliches Melaminharz, 90 %ig
30 g Bentone ® EW, 5 % in Wasser (Thixotropiermittel)
6 g Butylglykol
und gibt die Bronzeaufschlämmung unter dem Rührer dazu. Anschließend verdünnt man mit 405 g Wasser. Der so erhaltene Basislack wurde mit Wasser auf Spritzviskosität eingestellt und mit 12 bis 15 µm auf ein grundiertes Stahlblech aufgetragen. Nach einer Ablüftzeit von 5 Minuten wurde mit einem handelsüblichen ofentrocknenden Acrylharzklarlack üerlakkiert und 20 Minuten bei 130°C eingebrannt. Die nach diesem Verfahren hergestellten Lackfilme besitzen hohen Glinz, brillantes metallisches Aussehen und sind gut beständig gegen Wasser-, Licht- und Witterungseinwirkung.

## Beispiel 5

Man arbeitet mit der gleichen Apparatur wie in Beispiel 1 beschrieben:
Es werden vorgelegt und auf 130°C erhitzt
162,0 Tl. Butylglykol
20,9 " Celluloseacetobutyrat (Eastman® CAB 553-04)
74,1 " AC-Copolymer 405
2,6 " Cumolhydroperoxid
Nachdem aus den vorgelegten Komponenten eine homogene Lösung entstanden ist, tropft man unter Durchleitung eines schwachen Stickstoffstromes folgende Mischung innerhalb von 4 Stunden gleichmässig zu:
40,1 Tl. Styrol
84,8 " Methylmethacrylat
18,2 " Butylmethacrylat
24,2 " Hydroxiethylmethacrvlat
37,7 " Methacrylsäure
2,7 " Tertiär-Butylperoctoat
44,4 " Butylglykol
Nach weiteren 30 Minuten innerhalb von 15 Minuten ein Gemisch aus
38,8 Tl. Butylglykol
1,1 " Tertiär-Butylperoctoat
eintragen und 2 Stunden bei 130°C nachpolymerisieren. Anschliessend auf 80°C abkühlen, mit
33,2 Tl. Dimethylethanolamin
neutralisieren und mit
509,0 Tl. Wasser
verdünnen. Man erhält eine Dispersion mit 27 % Festkörpergehalt und einer Kornfeinheit unter 5 µm.

**Patentansprüche**

1. Verfahren zur Herstellung stabiler Dispersionen von Celluloseestern in Wasser, dadurch gekennzeichnet, daß ein Gemisch aus einem wasserlöslichen Harz aus der Gruppe Polyesterharze, Acrylharze und Alkydharze und α,β-ethylenisch ungesättigten Monomeren aus der Gruppe

(A) Ester einer α,β-ethylenisch ungesättigen Carbonsäure mit einem 1 bis 8 C-Atome enthaltenden Alkohol,

(B) Hydroxylgruppen in der Estergruppierung enthaltenden Estern der Acrylsäure und Methacrylsäure,

(C) Vinylmonomere, die neben einer polymerisierbaren Doppelbindung noch weitere, zur Vernetzung fähige, funktionelle Gruppen enthalten und

(D) weitere, zu den genannten Gruppen (A) bis (C) nicht gehörende Gruppen copolymerisierbarer Monomerer,

wobei die Gesamtmenge der Komponenten (A) bis (D) 100 Gew.-% ergibt, in Gegenwart der gelösten Celluloseester aus der Gruppe der Celluloseacetopropionate und Celluloseacetobutyrate copolymerisiert wird, wobei der Celluloseestergehalt, bezogen auf den Gesamtfeststoffgehalt der Dispersion, zwischen 5 und 40 % beträgt.

2. Verfahren nach Anspruch 1, dadurch gekennzeichnet, daß die α,β-ethylenisch ungesättigten Monomeren in folgenden Mengenverhältnissen verwendet werden:

(A) 2-80 Gewichtsprozent mindestens eines Esters einer α,β-ethylenisch ungesättigten Carbonsäure mit einem 1-8 Kohlenstoffatome enthaltenden Alkohol, und/oder

(B) 5-95 Gewichts-% mindestens eines Hydroxylgruppen haltigen Acrylsäureesters und Metacrylsäureesters und/oder

(C) 3-30 Gewichts-% mindestens eines Vinylmonomeren, das neben einer polymerisierbaren Doppelbindung noch weitere, zur Vernetzung fähige funktionelle Gruppen enthält und/oder (D) 3-80 Gewichts-% an weiteren, unter (A) - (C) nicht aufgeführten copolymerisierbaren Monomeren,

wobei die Summe der unter (A) - (D) aufgeführten Komponenten jeweils 100 ergibt.

3. Verfahren nach Ansprüchen 1 und 2, dadurch gekennzeichnet, daß Celluloseacetobutyrate mit einem Acetylgehalt von 2-30 % einem Butyrylgehalt von 15-55 %, Hydroxylgehalten von 0,5-5 % und einer Viskosität (ASTM-D-817-65 A und D-1343-56) von 0,038 - 152 dPas verwendet werden.

4. Verfahren nach Ansprüchen 1 und 2, dadurch gekennzeichnet, daß Celluloseacetopropionate mit einem Acetylgehalt von 2-5 %, einem Propionylgehalt von 30-55 % und einer Viskosität von 0,76 -76 dPas (ASTM-D 817-65 A und D-1343-56) verwendet werden.

5. Verfahren nach Ansprüchen 1-4, dadurch gekennzeichnet, daß die Celluloseester in den zur Polymerisation gelangenden Monomeren und/oder mit Wasser mischbaren Lösungsmitteln gelöst werden.

6. Verfahren nach Ansprüchen 1-5, dadurch gekennzeichnet, daß die Copolymerisation der Monomeren unter Abwesenheit von Wasser in einer Lösung der Celluloseester in organischen Lösungsmitteln durchgeführt wird, bis ein Copolymer mit einer Säurezahl von 30 - 120, vorzugsweise 50 - 100 entsteht, worauf nach Neutralisation mit geeigneten Aminen mit Wasser verdünnt und eine stabile Dispersion gebildet wird.

7. Verfahren nach Ansprüchen 1-6, dadurch gekennzeichnet, daß bei der Polymerisation die wässrige Lösung eines hitzehärtbaren Acrylharzes vorgelegt wird und die zu dispergierenden Celluloseester in den zu polymerisierenden Monomeren, gegebenenfalls unter Zusatz organischer Lösungsmittel, gelöst werden.

8. Verfahren nach Ansprüchen 1-7, dadurch gekennzeichnet, daß bei der Polymerisation ein wasserlösliches, von ungesättigten Fettsäuren freies Alkydharz oder ein wasserlöslicher linearer oder verzweigter ölfreier Polyester vorgelegt wird und die zu dispergierenden Celluloseester in den zu polymerisierenden Monomeren, gegebenenfalls unter Zusatz organischer Lösungsmittel, gelöst werden.

9. Verfahren nach Ansprüchen 1-8, dadurch gekennzeichnet, daß man der Ausgangsmischung zusätzlich ein Homopolymerisat oder Copolymerisat des Ethylens zusetzt.

10. Verfahren nach Anspruch 9, dadurch gekennzeichnet, daß das Ethylencopolymerisat ein Copolymeres von Ethylen mit Acrylsäure oder Vinylacetat ist, wobei der Gehalt an Vinylacetat 8 bis 29 % und die Säurezahl bei den Acrylsäurecopolymeren 30 bis 120 beträgt.

11. Verwendung der nach Ansprüchen 1 - 10 hergestellten Dispersionen zur Herstellung von Lacken, insbesondere Basislacken für Zweischicht-Naß-in-Naß-Systeme.

**Claims**

1. A process for preparing stable dispersions of cellulose esters in water, characterized in that a mixture comprising a water-soluble resin of the group consisting of polyester resins, acrylic resins and alkyd resins and α,β-ethylenically unsaturated monomers of the group consisting of

(A) esters of an α,β-ethylenically unsaturated carboxylic acid with an alcohol containing from 1 to 8 carbon atoms,

(B) esters of acrylic acid and methacrylic acid containing hydroxyl groups in the ester moiety,

(C) vinyl monomers containing further functional groups capable of cross-linking in addition to a polymerizable double bond, and

(D) further copolymerizable monomers not belonging to said groups (A) to (C),

0 069 936

the total amount of the components (A) to (D) being 100% by weight, is polymerized in the presence of the dissolved cellulose esters from the group consisting of cellulose acetopropionates and cellulose acetobutyrates, the cellulose ester contents, based on the total of solids in the dispersion, being from 5 and 40%.

2. The process according to claim 1, characterized in that the $\alpha,\beta$-ethylenically unsaturated monomers are employed in the following ratios of amounts:

(A) 2 to 80% by weight of at least one ester of an $\alpha,\beta$-ethylenically unsaturated carboxylic acid with an alcohol containing from 1 to 8 carbon atoms and/or (B) 5 to 95% by weight of at least one ester of acrylic acid and methacrylic acid containing hydroxyl groups, and/or

(C) 3 to 30% by weight of at least one vinyl monomer containing further functional groups capable of cross-linking in addition to a polymerizable double bond, and/or

(D) 3 to 80% by weight of further copolymerizable monomers not mentioned under (A) to (C), the sum of the components set forth under (A) to (D) being 100 in each case.

3. The process according to claims 1 and 2, characterized in that cellulose acetobutyrates having an acetyl content of from 2 to 30%, a butyryl content of from 15 to 55%, hydroxyl contents of from 0.5 to 5% and a viscosity (ASTM-D-817-65A and D-1343-56) of from 0.038 to 152 dPa s are employed.

4. The process according to claims 1 and 2, characterized in that cellulose acetopropionates having an acetyl content of from 2 to 5%, a propionyl content of from 30 to 55% and a viscosity (ASTM-D-817-65A and D-1343-56) of from 0.76 to 76 dPa s are employed.

5. The process according to claims 1 to 4, characterized in that the cellulose esters are dissolved in the monomers used for the polymerization and/or in water-miscible solvents.

6. The process according to claims 1 to 5, characterized in that the copolymerization of the monomers is carried out in the absence of water in a solution of the cellulose esters in organic solvents until a copolymer having an acid value of from 30 to 120, and preferably of from 50 to 100, has been formed, whereupon after neutralization with suitable amines it is diluted with water to form a stable dispersion.

7. The process according to claims 1 to 6, characterized in that in the polymerization the aqueous solution of a heat-curable acrylic resin is charged and the cellulose esters to be dispersed are dissolved in the monomers to be polymerized, optionally with the addition of organic solvents.

8. The process according to claims 1 to 7, characterized in that in the polymerization a water-soluble alkyd resin free from unsaturated fatty acids or a watersoluble linear or branched oil-free polyester is charged and the cellulose esters to be dispersed are dissolved in the monomers to be polymerized, optionally with the addition of organic solvents.

9. The process according to claims 1 to 8, characterized in that a homopolymer or copolymer of ethylene is further added to the starting mixture.

10. The process according to claims 9, characterized in that the ethylene copolymer is a copolymer of ethylene with acrylic acid or vinyl acetate, the content of vinyl acetate being from 8 to 29% and the acid value in the acrylic acid copolymers being from 30 to 120.

11. Use of the dispersions prepared according to claims 1 to 10 for the preparations of varnishes, and more specifically base varnishes for two-layer wet-in-wet systems.

**Revendications**

1. Procédé de préparation de dispersions stables d'esters de la cellulose dans de l'eau, caractérisé en ce qu'on copolymérise, en présence d'esters dissous de la cellulose provenant du groupe des acéto-propionates de la cellulose et des acéto-butyrates de la cellulose, un mélange d'une résine hydrosoluble du groupe des résines polyesters, des résines acryliques et des résines alkydes, et des monomères à insaturation éthylénique en $\alpha,\beta$ choisis dans l'ensemble formé par

(A) des esters d'un acide carboxylique à insaturation éthylénique en $\alpha,\beta$ avec un alcool contenant 1 à 8 atomes de carbone,

(B) des esters de l'acide acrylique et de l'acide méthacrylique contenant des groupes hydroxyles dans le groupement ester,

(C) des monomères vinyliques qui, en plus d'une double liaison polymérisable, contiennent encore d'autres groupes fonctionnels capables de produire de la réticulation, et (D) d'autres monomères copolymérisables n'appartenant pas aux groupes (A) à (C) cités, la somme totale des composants (A) à (D) donnant 100 % en poids, la teneur en ester(s) de la cellulose, sur la base de la teneur en extrait sec total des dispersions, se situant entre 5 et 40 %.

2. Procédé selon la revendication 1, caractérisé en ce qu'on utilise selon les rapports pondéraux suivants les monomères à insaturation éthylénique en $\alpha,\beta$:

(A) 2 à 80 % en poids d'au moins un ester d'un acide carboxylique à insaturation éthylénique en $\alpha,\beta$ avec un alcool contenant 1 à 8 atomes de carbone, et/ou

(B) 5 à 95 % en poids d'au moins un ester d'acide acrylique et d'un ester d'acide méthacrylique contenant des groupes hydroxyles et/ou

8

(C) 3 à 30 % en poids d'au moins un monomère vinylique qui, en plus d'une double liaison polymérisable, contient encore d'autres groupes fonctionnels capables de produire une réticulation et/ou

(D) 3 à 80 % en poids d'autres monomères copolymérisables, non cités en (A) - (C), la somme des composants cités en (A) - (D) donnant toujours 100 %.

3. Procédé selon les revendications 1 et 2, caractérisé en ce qu'on utilise des acéto-butyrates de cellulose ayant une teneur en acétyle de 2 à 30 %, une teneur en butyryle de 15 à 55 %, des teneurs en hydroxyle de 0,5 à 5 % et une viscosité (norme ASTM-D-817-65 A et D-1343-56) de 0,038 à 152 dPa.s.

4. Procédé selon les revendications 1 et 2, caractérisé en ce qu'on utilise des acéto-propionates de cellulose ayant une teneur en acétyle de 2 à 5 %, une teneur en propionyle de 30 à 55 % et une viscosité de 0,76 - 76 dPa.s (norme ASTM-D 817-65 A et D-1343-56).

5. Procédé selon les revendications 1 à 4, caractérisé en ce qu'on dissout les esters de la cellulose dans les monomères destinés à la polymérisation et/ou dans des solvants miscibles à l'eau.

6. Procédé selon les revendications 1 à 5, caractérisé en ce qu'on conduit la copolymérisation des monomères à l'abri de l'eau dans une solution des esters de la cellulose dans des solvants organiques, jusqu'à ce qu'il en résulte un copolymère ayant un indice d'acide de 30 à 120, avantageusement de 50 à 100 puis, après neutralisation avec des amines appropriées, on dilue à l'eau et l'on forme une dispersion stable.

7. Procédé selon les revendications 1 à 6, caractérisé en ce que, lors de la polymérisation, on place tout d'abord la solution aqueuse d'une résine acrylique thermodurcissable, et l'on dissout, éventuellement avec addition d'un solvant organique, les esters de la cellulose à disperser dans les monomères à polymériser.

8. Procédé selon les revendications 1 à 7, caractérisé en ce que, lors de la polymérisation, on place tout d'abord une résine alkyde hydrosoluble dépourvue d'acides gras insaturés ou un polyester hydrosoluble, linéaire ou ramifié et dépourvu d'huile, et l'on dissout, éventuellement avec addition d'un solvant organique, les esters de la cellulose à disperser dans les monomères à polymériser.

9. Procédé selon les revendications 1 à 8, caractérisé en ce qu'on ajoute au mélange de départ, en supplément, un homopolymère ou un copolymère de l'éthylène

10. Procédé selon la revendication 9, caractérisé en ce que le copolymère de l'éthylène est un copolymère de l'éthylène avec l'acide acrylique ou l'acétate de vinyle, la teneur en acétate de vinyle étant de 8 à 29 % et l'indice d'acide des copolymères de l'acide acrylique étant de 30 à 120.

11. Utilisation des dispersions, préparées selon les revendications 1 à 10, pour préparer des laques, en particulier des résines de base pour des systèmes à deux couches mouillé sur mouillé.